# EUROPÄISCHE PATENTANMELDUNG

(11) **EP 1 881 272 A1**
(43) Veröffentlichungstag der Anmeldung: **23.01.2008**
(21) Anmeldenummer: 06015142.0
(22) Anmeldetag: 20.07.2006
(51) Int. Cl.: F23R 3/28, F23N 1/00, F23K 5/00, F23K 5/14, F23D 11/26, F23D 14/48, F23D 14/58, F16K 31/00

(54) **Vorrichtung und Verfahren zur Versorgung eines Brenners mit einem Brennstofffluid**

(71) Anmelder: SIEMENS AKTIENGESELLSCHAFT, 80333 München (DE)
(72) Erfinder: Bayram, Gülsen, 45356 Essen (DE); Braun, Gilbert, 52134 Herzogenrath (DE); Engler, Thorsten, Dr., 45481 Mühlheim an der Ruhr (DE); Ertle, Volker, 45529 Hattlingen (DE)

(57) **Zusammenfassung**

Die vorliegende Erfindung betrifft eine Vorrichtung (14) zur Versorgung eines Brenners mit einem Brennstofffluid, die mindestens eine Öffnung (16), ein die Öffnung (16) wenigstens teilweise umgebendes Piezo-Material (18) und eine steuerbare Spannungsquelle (19) aufweist, die mit dem Piezo-Material (18) verbunden ist.

## Beschreibung

Die vorliegende Erfindung betrifft eine Vorrichtung und ein Verfahren zur Versorgung eines Brenners, insbesondere eines Brenners einer Gasturbine, mit einem Brennstofffluid.

Brennstofffluide, insbesondere Brenngase, für Gasturbinen sind von unterschiedlicher Qualität. Gase mit fast reinem Methan und hohen Heizwert sind eher die Ausnahme, Gase mit niedrigem Heizwert sind immer mehr in der Anwendung. Je nach Verfügbarkeit müssen daher Gase mit unterschiedlichem Heizwert in einer Gasturbine verbrannt werden können. Hieraus ergeben sich in Abhängigkeit vom verwendeten Gas Unterschiede in dem erforderlichen Gasmassenstrom zum Brenner. Bei unterschiedlichen Gasmassenströmen treten jedoch bei Eintritt des Gases in den Brenner unterschiedliche Druckverluste auf, was Auswirkungen auf die Verbrennung im Brenner hat. Ähnliches gilt für flüssige Brennstoffe.

Aufgabe der vorliegenden Erfindung ist es, eine verbesserte Vorrichtung zur Versorgung eines Brenners mit Brennstofffluid zur Verfügung zu stellen, die insbesondere vorteilhaft mit Fluiden mit unterschiedlichen Heizwerten betrieben werden kann.

Eine weitere Aufgabe der vorliegenden Erfindung ist es, ein Verfahren zur Versorgung eines Brenners mit Brennstofffluid zur Verfügung stellen, das die Abhängigkeit des Druckverlustes von der Qualität des Fluids verringert.

Die erste Aufgabe wird durch eine Vorrichtung zur Versorgung eines Brenners mit einem Brennstofffluid nach Anspruch 1, die zweite Aufgabe durch ein Verfahren zur Versorgung eines Brenners mit einem Brennstofffluid nach Anspruch 6 gelöst.

Eine erfindungsgemäße Vorrichtung zur Versorgung eines Brenners mit einem Fluid weist mindestens eine Öffnung, ein die Öffnung wenigstens teilweise umgebendes Piezo-Material sowie eine mit dem Piezo-Material zum Anlegen einer Spannung verbundene steuerbare Spannungsquelle auf.

Der Erfindung liegt die Erkenntnis zugrunde, dass das die Öffnung umgebende Piezo-Material geeignet ist, den Öffnungsquerschnitt der Öffnung und somit den Druckverlust des Brennstofffluids beim Strömen durch die Öffnung durch Anlegen einer geeigneten Spannung zu beeinflussen. Durch Verändern des Öffnungsquerschnittes kann der Druckverlust des Brenners auch bei unterschiedlichen Masseströmen weitgehend konstant gehalten werden kann. D.h., der Brenner kann mit Hilfe der Spannung derart variabel betrieben werden, dass der Druckverlust über dem Brenner konstant bleibt, weitgehend unabhängig von dem Massenstrom des Fluids und damit von der Fluidqualität. Fluide mit unterschiedlicher Qualität und den dadurch erforderlichen unterschiedlichen Massenströmen können daher mit fast gleichem Druckverlust der Verbrennung zugeführt werden. Die Verformung des Piezo-Materials beruht auf dem Effekt, dass bei Anlegen einer elektrischen Spannung elektrische Ladungen an der Oberfläche des Piezo-Materials auftreten, die zu einer Verschiebung der Ladungs-Schwerpunkte und dadurch zu einer geometrischen Verformung des Piezo-Materials führen. Durch Steuern der elektrischen Spannung kann die geometrische Verformung beeinflusst werden.

In einer besonderen Ausgestaltung umfasst die Vorrichtung mindestens ein Rohr oder eine Schaufel, das beziehungsweise die die mindestens eine Öffnung und das Piezo-Material aufweist. Ein Brenner, insbesondere ein Brenner einer Gasturbine, wird häufig über Düsenöffnungen in Schaufeln, etwa Drallschaufeln, welche sich durch einen Luftzufuhrkanal erstrecken, mit Brennstoff versorgt. Statt der Schaufeln kommen auch Düsenrohre im Luftzufuhrkanal zur Anwendung. Wenn sich das Piezo-Material ausdehnt, vergrößern sich auch die Öffnungen in der Schaufel beziehungsweise im Rohr, und es kann ein höherer Fluidmassenstrom bei gleichbleibendem Druckverlust durch die Öffnungen strömen. Besonders vorteilhaft besteht die gesamte Schaufel beziehungsweise das gesamte Rohr aus dem Piezo-Material.

Alternativ weist die erfindungsgemäße Vorrichtung ein Basismaterial auf, das mit dem Piezo-Material beschichtet ist. Beispielsweise umfasst die Vorrichtung eine Schaufel oder ein Rohr aus einem Basismaterial, in dem die Öffnungen angeordnet sind, auf. Das Basismaterial ist dann mit einem Piezo-Material beschichtet, sodass das Piezo-Material die in dem Basismaterial angeordneten Öffnungen zumindest teilweise überdeckt. Das Piezo-Material weist ebenfalls Öffnungen auf, die fluchtend zu den Öffnungen des Basismaterials angeordnet sind. Der Öffnungsschnitt der in dem Piezo-Material angeordneten Öffnungen ist ohne anliegende Spannung kleiner als der Öffnungsquerschnitt der Öffnungen des Basismaterials. Beim Anlegen einer Spannung an das Piezo-Material verändert das Piezo-Material derart sein Volumen, dass sich die Öffnungsquerschnitte der in dem Piezo-Material angeordneten Öffnungen verändern. Dadurch werden die in dem Basismaterial angeordneten Öffnungen weiter freigelegt und dementsprechend der Gesamtöffnungsquerschnitt vergrößert.

Vorteilhaft umfasst das Piezo-Material eine Keramik oder ein ferroelektrisches Material. Alternativ kann das Piezo-Material aus Polyvinylidenfluorid bestehen. Derartige Materialien sind in der Lage, sich bei Anlegen einer Spannung zu verformen.

In dem erfindungsgemäßen Verfahren zum Einbringen eines Brennstofffluids in einen Brenner mit mindestens einer Öffnung sowie einem die Öffnung umgebenden und bei Anlegen einer Spannung den Öffnungsquerschnitt der Öffnung beeinflussenden Piezo-Material wird das Piezo-Material mit einer Spannung versorgt, wobei der Spannungswert vom Fluidmassenstrom des zugeführten Brennstofffluids abhängt. Auf diese Weise kann der Öffnungsquerschnitt jeweils so an das Brennstofffluid angepasst werden, dass der Druckabfall beim Einströmen in den Brenner unabhängig vom Brennwert des Brennstofffluids weitgegehend konstant gehalten wird. Das Brennstofffluid kann insbesondere ein Brenngas sein.

Das erfindungsgemäße Verfahren ist insbesondere für Brenner von Gasturbinen geeignet.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- FIG 1: zeigt schematisch eine erfindungsgemäße Vorrichtung ohne Anlegung einer Spannung.
- FIG 2a: zeigt die erfindungsgemäße Vorrichtung bei einer ersten Spannung.
- FIG 2b: zeigt die erfindungsgemäße Vorrichtung bei einer zweiten Spannung.
- FIG 2c: zeigt die erfindungsgemäße Vorrichtung bei einer dritten Spannung.

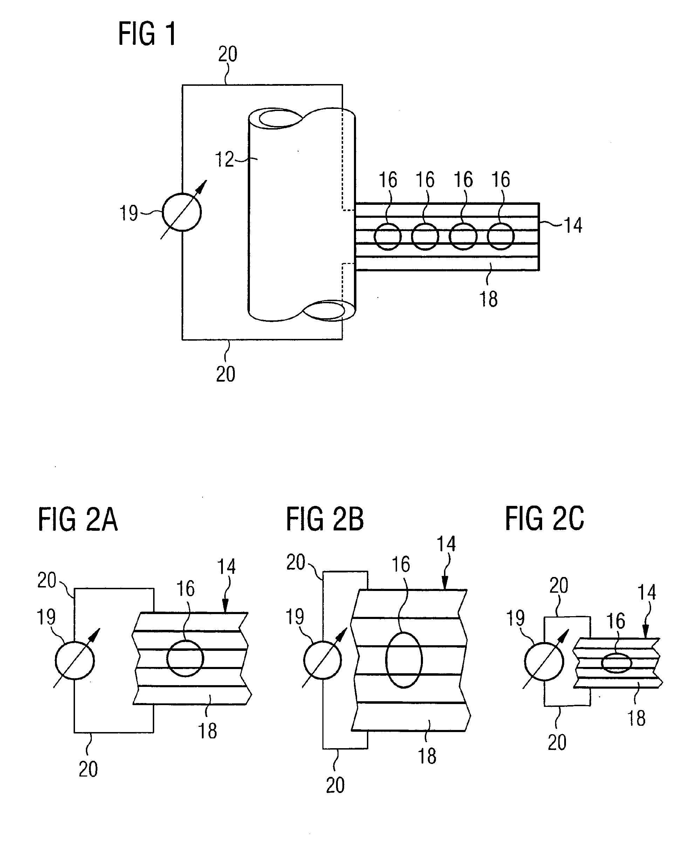

FIG 1 zeigt schematisch eine erfindungsgemäße Vorrichtung. Die Vorrichtung umfasst eine rohrförmige Brenngaszuleitung 12, von der aus sich Drallschaufeln 14 in einen Luftzufuhrkanal 15 eines Gasturbinenbrenners hinein erstrecken. Der Übersichtlichkeit halber ist in der Figur lediglich eine Drallschaufel 14 dargestellt. Die Schaufel 14 weist Öffnungen 16 auf, von denen in FIG 1 vier gezeigt sind, und ist aus einem Piezo-Material 18 hergestellt. Die Öffnungen 16 dienen zum Eindüsen des Brenngases als Brennstofffluid in die durch den Luftzufuhrkanal 15 des Brenners strömende Luft. Statt zum Eindüsen eines Brenngases können die Öffnungen auch zum Eindüsen eines flüssigen Brennstoffes als Brennstofffluid ausgebildet sein.

Der Druckverlust, der das Brenngas oder ein sonstiges Brennstofffluid beim Ausströmen aus den Öffnungen 16 erfährt, hängt bei vorgegebenem Öffnungsquerschnitt vom Massenstrom des eingedüsten Brenngases ab. Je höher der durch die Öffnung mit dem vorgegebenen Öffnungsquerschnitt ausströmende Massenstrom ist, desto höher ist der auftretende Druckverlust.

Der Druckverlust ist für den Betrieb des Brenners eine bedeutende Größe und sollte für einen optimalen Betrieb des Brenners einen bestimmten Wert aufweisen. Er wird im Wesentlichen von zwei Größen bestimmt, nämlich vom Massenstrom des durch die Öffnungen zugeführten Brenngases und vom Öffnungsquerschnitt der Öffnungen. Durch Vergrößern des Öffnungsquerschnittes der Öffnungen 16 kann ein auf Grund höheren Massenstromes erhöhter Druckverlust kompensiert werden, so dass der Druckverlust bei Erhöhen des Massenstromes, beispielsweise wegen einer Umstellung auf ein Brenngas mit geringerem Heizwert, konstant gehalten werden kann. Entsprechend kann eine Verringerung des Massenstromes, beispielsweise bei Verwendung eines Brenngases mit höherem Heizwert, durch Verringern des Öffnungsquerschnittes der Öffnungen 16 kompensiert werden.

Das Ändern des Öffnungsquerschnittes der Öffnungen 16 der Drallschaufel 14 kann dank ihrer Beschaffenheit aus einem Piezo-Material 18 durch Anlagen einer geeigneten Spannung mittels einer einstellbaren Spannungsquelle 19 und elektrischer Leitungen 20 von der Spannungsquelle 19 zur Drallschaufel 14 erreicht werden. Durch das Einstellen der am Piezo-Material 18 anliegenden Spannung lässt sich das Volumen des Piezo-Materials 18 und somit der Öffnungsquerschnitt der Öffnungen 16 steuern.

In den Figuren 2a bis 2c ist die in FIG 1 gezeigte Schaufel bei Anlegung verschiedener Spannungen gezeigt.

Im vorliegenden Ausführungsbeispiel ist das Piezo-Material 18 so geschichtet, dass eine Volumenänderung in erster Linie zu einer Ausdehnung in Richtung A erfolgt. Die Öffnungen 16 sind so ausgestaltet, dass sie bei einer bestimmten Spannung U1 (FIG 2a) einen runden Querschnitt aufweisen. Bei einer anderen Spannung U2 (FIG 3b) ist das Piezo-Material 18 im Vergleich zur ersten Spannung U1 (FIG 3a) in der Ausdehnungsrichtung A ausgedehnt, sodass die Löcher 16 in Ausdehnungsrichtung A gestreckt werden. Dadurch wird ihr Öffnungsquerschnitt vergrößert. Bei Anlegen einer dritten Spannung U3 (FIG 3c) werden Öffnungen 16 auf Grund einer Kontraktion des Piezo-Materials 18 in Ausdehnungsrichtung A gestaucht und somit ihr Öffnungsquerschnitt verringert.

Die Steuerung der Spannungsquelle 19 kann beispielsweise auf der Basis einer gespeicherten Nachschlagetabelle erfolgen, in der verschiedenen Heizwerten Spannungen zugeordnet sind, die jeweils zu einem derartigen Öffnungsquerschnitt der Öffnungen 16 führen, dass der Druckverlust für alle Heizwerte im Wesentlichen derselbe ist. Alternativ kann in der Steuerung auch eine funktionale Abhängigkeit des Öffnungsquerschnittes vom Heizwert des Brennstofffluids gespeichert sein, auf deren Basis der Öffnungsquerschnitt für das jeweils verwendete Brennstofffluid berechnet wird.

Obwohl in den Figuren eine Schaufel 14 mit vier Öffnungen gezeigt ist, kann die Anzahl, Anordnung und Form der Öffnungen variieren. Ebenso kann die Anzahl, Anordnung und Form der Schaufeln 14 selbst variieren. Statt der Drallschaufeln 14 können auch Düsenrohre vorhanden sein, in denen die Düsenöffnungen zumindest teilweise von Piezo-Material umgeben sind, die also beispielsweise au einem Piezo-Material bestehen oder die aus einem Basismaterial bestehen, das mit einem Piezo-Material beschichtet ist.

## Patentansprüche

1. Vorrichtung (14) zur Versorgung eines Brenners mit einem Brennstofffluid, die mindestens eine Öffnung (16) und ein die Öffnung (16) wenigstens teilweise umgebendes Piezo-Material (18) sowie eine steuerbare Spannungsquelle (19) aufweist, die mit dem Piezo-Material (18) verbunden ist.

2. Vorrichtung nach Anspruch 1,
die mindestens eine Schaufel (14) oder ein Rohr umfasst, die beziehungsweise das die mindestens eine Öffnung (16) und das Piezo-Material (18) aufweist.

3. Vorrichtung nach Anspruch 2,
bei der die Schaufel (14) beziehungsweise das Rohr vollständig aus dem Piezo-Material (18) besteht.

4. Vorrichtung nach Anspruch 1 oder 2,
die weiterhin ein Basismaterial aufweist, das mit dem Piezo-Material (18) beschichtet ist.

5. Vorrichtung nach einem der vorangehenden Ansprüche,
bei der das Piezo-Material (18) eine Keramik oder ein ferroelektrisches Material umfasst.

6. Verfahren zum Einbringen eines Brennstofffluids in einen Brenner mit mindestens einer Öffnung (16) zum Einbringen des Brennstofffluids und einem die Öffnung umgebenden und bei Anlegen einer Spannung den Öffnungsquerschnitt der Öffnung (16) beeinflussenden Piezo-Material (18), in dem das Piezo-Material (18) mit einer Spannung versorgt wird und der Spannungswert vom Fluidmassenstrom des Brennstoffluids abhängt.

7. Verfahren nach Anspruch 6,
bei dem das Brennstoffluid ein Brenngas, ist.

8. Verfahren nach einem der Ansprüche 6 bis 7,
bei dem der Brenner ein Gasturbinenbrenner ist.
